# EUROPEAN PATENT SPECIFICATION

(11) **EP 3 086 582 B1**
(45) Date of publication and mention of the grant of the patent: **21.11.2018**
(21) Application number: 16164188.1
(22) Date of filing: 07.04.2016
(51) Int. Cl.: H04W 8/20

(54) **METHOD, DEVICES AND SYSTEM FOR TRANSMITTING SIM CARD INFORMATION**
VERFAHREN, VORRICHTUNGEN UND SYSTEM ZUR ÜBERTRAGUNG VON SIM-KARTEN-INFORMATIONEN
PROCÉDÉ, DISPOSITIFS ET SYSTÈME DE TRANSMISSION D'INFORMATIONS DE CARTES SIM

(30) Priority: 24.04.2015 CN 201510202319
(43) Date of publication of application: 26.10.2016
(73) Proprietor: Xiaomi Inc., Beijing 100085 (CN)
(72) Inventor: LIU, Guilin, 100085 Haidian District (CN); LI, Xinwei, 100085 Haidian District (CN); YANG, Zhongyu, 100085 Haidian District (CN)
(74) Representative: Sadler, Peter Frederick

(56) References cited:
- EP-A1- 2 824 945
- WO-A1-2012/140654
- WO-A1-2013/171648
- US-A1- 2010 311 468

## Description

### TECHNICAL FIELD OF THE INVENTION

The present disclosure relates to the field of computer technology, particularly to a method, device and system for transmitting information.

### TECHNICAL BACKGROUND OF THE INVENTION

With the development of mobile terminal technology, mobile terminals are more and more widely used, and have become one of the most important tools for people's daily work and life. Operators offer international roaming services to provide information transmission services for the user who travels or does business abroad.

After the user activates an international roaming service, when the user carries out information or data transfer abroad, the mobile terminal will transmit the information or data to be transmitted to a wireless communication network belonging to the SIM (Subscriber Identity Module) card of the mobile terminal through the wireless communication network at the user's locality. The information or data to be transmitted will be transferred and processed by the wireless communications network belonging to the SIM card of the mobile terminal. However, under such a condition, the wireless communications network of the user's locality must be used, so the information or data transmission efficiency is low.

International patent application WO 2013/171648 describes a communication apparatus that includes an interface to a plurality of wireless modems and bonding circuitry which is configured to receive multiple virtual identities, to load respective ones of the received virtual identities into one or more of the wireless modems, and to communicate over the air by simultaneously transmitting or receiving a data stream over at least the two or more of the wireless modems.

European patent application EP 2824945 describes a mobile device comprising a first modem associated to a first SIM card, the first modem being configured to establish a roaming session within a visited mobile network based on identification information of the first SIM card. The device also comprises a second modem associated to a SIM proxy module, the SIM proxy module being configured to retrieve identification information from a remote second SIM card through a roaming session established by the first modem. The remote second SIM card is provisioned with a local subscription to at least a visited mobile network, the second modem being configured to establish a local session within the at least visited mobile network based on the retrieved identification information of the remote second SIM card.

International patent application WO 2012/140654 describes a system for registering a cellular device. The system comprises a non cellular communication module which establishes a non cellular communication connection with a remote network node over a non cellular communication network and acquires identification and/or authentication data of a subscriber of a visited cellular network from the remote network node over the non cellular communication connection, a subscriber authentication unit adaptor configured for engaging with contacts of a subscriber authentication unit socket of a hosting cellular device, and a managing module which receives the identification and/or authentication data from the non cellular communication module and provides the identification and/or authentication data to the hosting cellular communication via the authentication unit adaptor so as to allow to registering the hosting cellular communication to the visited cellular network.

### SUMMARY OF THE INVENTION

The invention is defined in the independent claims to which reference is now directed. Preferred features are set out in the dependent claims.

The embodiments and/or examples of the following description which are not covered by the appended claims are considered as not being part of the present invention.

### DRAWINGS OF THE INVENTION

The accompanying drawings, which are incorporated in and constitute a part of this specification, illustrate embodiments consistent with the disclosure and, together with the description, serve to explain the principles of the disclosure. In the figures:
Fig. 1 is a flow chart showing a method for transmitting information, according to an exemplary embodiment;
Fig. 2 is a flow chart showing a method for transmitting information, according to an exemplary embodiment;
Fig. 3 is a flow chart showing a method for transmitting information, according to an exemplary embodiment;
Fig. 4 is a block diagram showing a system framework, according to an exemplary embodiment;
Fig. 5 is a schematic diagram showing a terminal structure, according to an exemplary embodiment;
Fig. 6 is a schematic diagram showing a server structure, according to an exemplary embodiment;
Fig. 7 is a schematic diagram showing a server structure, according to an exemplary embodiment;
Fig. 8 is a schematic diagram showing a terminal structure, according to an exemplary embodiment;
Fig. 9 is a schematic diagram showing a server structure, according to an exemplary embodiment.

With the above figures, the embodiments of the present disclosure have been shown and will be described in details in the following. These figures and description do not limit the scope of the disclosure by any way but describe the concept of the present disclosure for the person skilled in the art with reference to certain embodiments.

### EMBODIMENTS OF THE INVENTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the disclosure. Instead, they are merely examples of devices and methods consistent with aspects related to the disclosure as recited in the appended claims.

### Embodiment 1

The embodiment of the disclosure provides a method for transmitting information. The method may be realized with a terminal and a server.

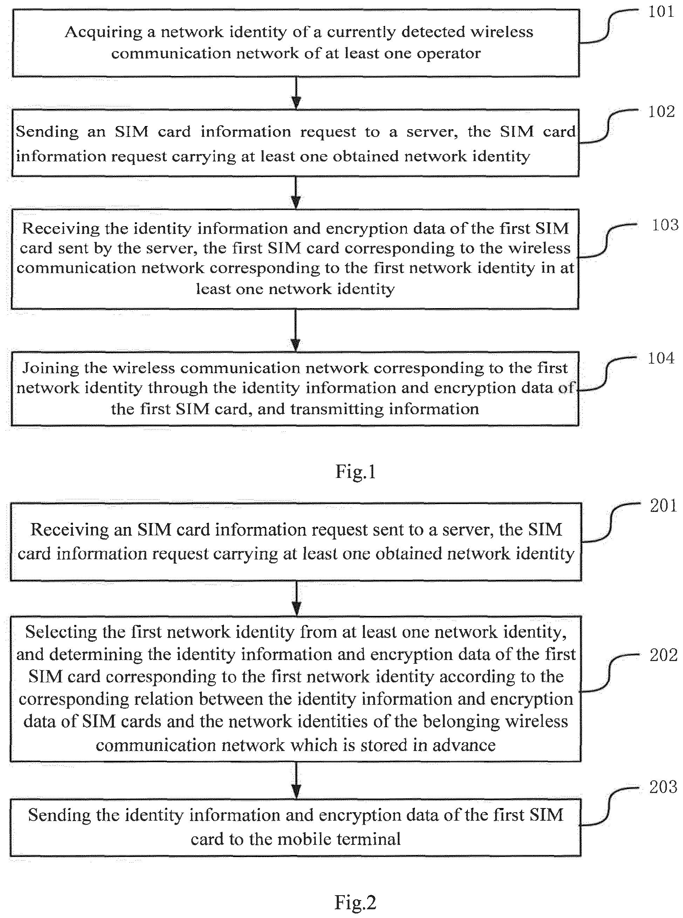

As shown in Fig. 1, the process of the terminal of the method may comprise the following steps:
In step 101, acquiring a network identity of a currently detected wireless communication network of at least one operator.

In step 102, sending a SIM card information request to the server, wherein the SIM card information request carrying at least one acquired network identity.

In step 103, receiving identity information and encryption data of a first SIM card sent by the server, the first SIM card belonging to the wireless communication network corresponding to a first network identity in at least one network identity.

In step 104, transmitting the information by adding the identity information and encryption data of the first SIM card to the wireless communication network corresponding to the first network identity.

As shown in Fig.2, the process of the server of the method may comprise the following steps:
In step 201, receiving the SIM card information request sent by a mobile terminal, the SIM card information request carrying at least one network identity acquired by the mobile terminal.

In step 202, selecting the first network identity from at least one network identity, and determining the identity information and encryption data of the first SIM card corresponding to the first network identity according to the corresponding relation between the identity information and encryption data of SIM cards and the network identities of the belonging wireless communication network which is stored in advance.

In step 203, sending the identity information and encryption data of the first SIM card to the mobile terminal.

In an embodiment of the disclosure, acquiring the network identity of the currently detected wireless communication network of at least one operator, sending the SIM card information request to the server, the SIM card information request carrying at least one acquired network identity, receiving the identity information and encryption data of the first SIM card sent by the server, the first SIM card corresponding to the wireless communication network corresponding to the first network identity in at least one network identity, joining the wireless communication network corresponding to the first network identity through the identity information and encryption data of the first SIM card, and transmitting information. In this way, the mobile terminal may process the information to be transmitted through the wireless communication network of a current locality, instead of processing the information to be transmitted by sending it to the wireless communication network belonged to the SIM card of the mobile terminal through the wireless communication network at the user's locality. Therefore, the efficiency of information transmission by the user is improved.

### Embodiment 2

The embodiment of the disclosure provides a method for transmitting information. The method may be realized with a terminal and a server. The terminal may has the function for transmitting information, such as a mobile phone, a tablet or other mobile terminals. The server may be a background server for a certain application program.

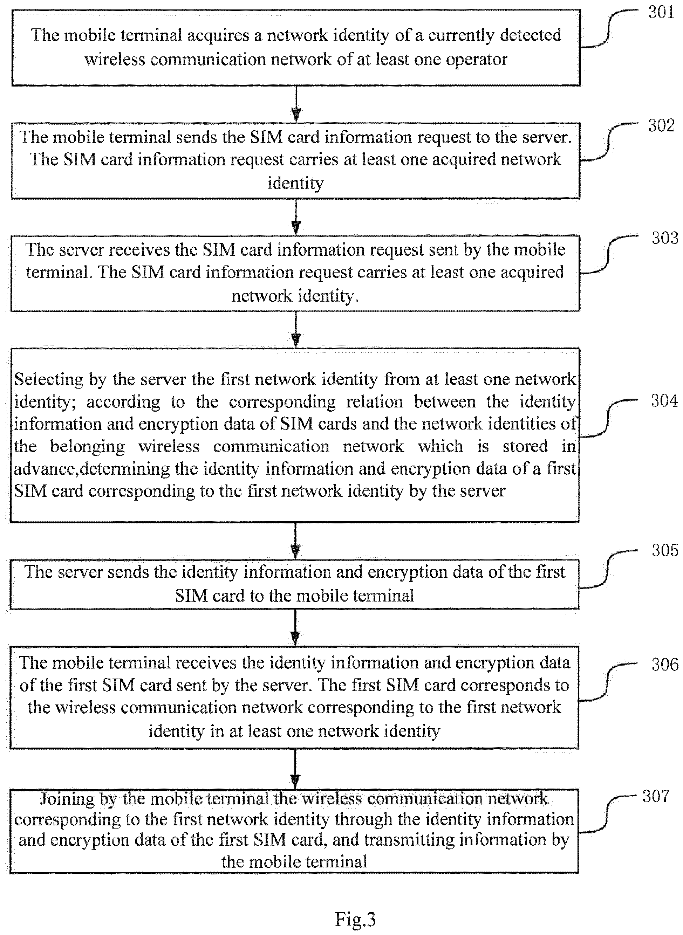

As shown in Fig.3, the processed process of the method may comprise the following steps:
In step 301, the mobile terminal acquires a network identity of a currently detected wireless communication network of at least one operator.

In implementation, the mobile terminal may receive a network signal sent by a base station of the wireless communication network. After receiving the network signal, the mobile terminal may acquire a network identity of the wireless communication network corresponding to the network signal. The mobile terminal may receive the network signals of the wireless communication networks of a plurality of the operators and further acquire the network identities of the wireless communication networks of a plurality of the operators. The mobile terminal may acquire the network identity of the currently detected wireless communication network of at least one operator after starting up, and also may acquire the network identity of the currently detected wireless communication network of at least one operator after receiving a detected instruction of the user.

Optionally, a trigger condition for the above steps may be arranged. Correspondingly, the processed process of step 101 may be as follows: when detecting that the location or position of itself is changed and the changed distance exceeds a preset threshold, the mobile terminal acquires the network identity of the currently detected wireless communication network of at least one operator.

In implementation, the mobile terminal may be provided with a position detection function in advance, for example, a positioning or location function, e.g. GNSS. The mobile terminal may detect its position/location. When detecting that the position of itself is changed and the changed distance exceeds a preset threshold, the mobile terminal acquires the network identity of the currently detected wireless communication network of at least one operator. The mobile terminal may detect the position of itself after starting up each time, and compare a currently detected position with the position which is detected last time to determine the changed distance of the position. If the changed distance exceeds the preset threshold, acquiring the network identity of the currently detected wireless communication network of at least one operator. The mobile terminal also may take the position of itself at some moment as a reference position. When a preset cycle for detection position is reached, the mobile terminal detects the current position of itself and determines the changed distance between the current position and the reference position. If the changed distance exceeds the preset threshold, the mobile terminal acquires the network identity of the currently detected wireless communication network of at least one operator. In addition, the user also may arrange some position as the reference position in a position setting interface of the mobile terminal. When the preset cycle for detecting position is reached, the mobile terminal detects the current position of itself and determines the changed distance between the current position and the reference position to carry out the above acquiring process.

Optionally, a trigger condition of the above steps may be arranged. Correspondingly, the processed process of step 101 may be as follows: when the preset cycle for detecting is reached, the mobile terminal acquires the network identity of the currently detected wireless communication network of at least one operator.

In implementation, the mobile terminal may preset the cycle for detecting the network identity in advance. When the preset cycle for detecting is reached, the mobile terminal may detect the network signal of the wireless communication network which is currently received, to further acquire the network identity of these wireless communication networks.

In step 302, the mobile terminal sends the SIM card information request to the server. The SIM card information request carries at least one acquired network identity.

In implementation, the user may install the application program for acquiring the SIM (Subscriber Identity Module) card information on the mobile terminal. The mobile terminal may send the SIM card information request to the server through the application program after acquiring the network identity of the currently detected wireless communication network of at least one operator. The SIM card information request may carry all acquired network identifiers or the acquired network identifiers of a plurality of the wireless communication networks of which the acquired signal is stronger.

Optionally, the mobile terminal may determine whether there is a wireless communication network which corresponds to the network identity of the SIM card mounted or installed locally within the terminal. Correspondingly, the processed process of step 102 may be as follows: if the network identity of the currently used SIM card is different from at least one acquired network identity, a locality is determined to be under a roaming state. If the locality is under the roaming state, the SIM information request is sent to the server. The SIM card information request carries at least one acquired network identity.

In implementation, after acquiring the network identity of the currently detected wireless communication network of at least one operator, the mobile terminal may acquire the network identity of the SIM card mounted locally to further check whether there is the network identity of the SIM card mounted locally in the acquired network identity. If there is a network identity of the SIM card mounted locally in the acquired network identity, it indicates that there currently is a wireless communication network which corresponds to the network identity of the SIM mounted locally. The user may transfer the information through the SIM card mounted locally instead of the mobile terminal. If there is not the network identity of the SIM card mounted locally in the acquired network identity, the mobile terminal may send the SIM card information request to the server.

Optionally, the mobile terminal also may determine whether the identity information and encryption data of the SIM card corresponding to the wireless communication network corresponding to the above acquired network identity are stored locally. The corresponding processes process may be as follows: if the network identity of the currently used SIM card is different from at least one acquired network identity, and the identity information and encryption data of the SIM card corresponding to the wireless communication network corresponding to at least one network identity are not stored locally, the locality is determined to be under the roaming state.

In implementation, besides being stored on the SIM card, the mobile terminal also stores the identity information and encryption data of the SIM card corresponding to the wireless communication network corresponding to some network identity. The identity information of the SIM card may include the network identity of the wireless communication network belonging to the SIM card. After acquiring the network identity of the currently detected wireless communication network of at least one operator, the mobile terminal may acquire the network identity of the SIM card mounted locally and the stored network identity of the SIM card to further check whether there is the network identity of the SIM card mounted locally or the stored network identity of the SIM card in the acquired network identity. If there is the network identity of the SIM card mounted locally or the stored network identity of the SIM card in the acquired network identity, the mobile terminal does not carry out processing. If there is not the network identity of the SIM card mounted locally and the stored network identity of the SIM card in the acquired network identity, the mobile terminal may send the SIM card information request to the server.

In step 303, the server receives the SIM card information request sent by a mobile terminal. The SIM card information request carries at least one network identifier acquired by the mobile terminal.

In implementation, after the mobile terminal sends the SIM card information request to the server, the server receives the SIM card information request. The serve may parse the SIM card information request, and acquire the network identifier therein for subsequent processing.

In step 304, the server selects the first network identifier from at least one network identifier. According to the corresponding relation between the identity information and encryption data of SIM cards and the network identities of the corresponding wireless communication network to which they belong, which is stored in advance, the server determines the identity information and encryption data of a first SIM card corresponding to the first network identifier.

The identity information of the SIM card may be configured to identify the identity information of the SIM card. The identity information of the SIM card may include IMSI (International Mobile Subscriber Identification Number), ICCID(Integrate circuit card identity),etc. The encryption data of the SIM card may be configured to encrypt a secret key (for example, Key identifier) for transmitting the data between the encrypted SIM card and the server of the operator.

In implementation, the server may store the identity information and encryption data of a plurality of the SIM cards in advance, correspondingly store the network identifier of the wireless communication network belonging to these SIM cards, and establish the corresponding relation of the network identifier of the wireless communication network to which the SIM cards belong and the identity information and encryption data of the SIM card. After acquiring the network identifier in the SIM card information request, the server may select the first network identifier from the network identifier at random, and then determine the identity information and encryption data of the SIM card corresponding to the first network identifier in the above corresponding relation. In the identity information and encryption data of these SIM card, the identity information and encryption data of the SIM card (i.e., the identity information and encryption data of the first SIM card) to be used is selected at random.

Optionally, the server may send the attribute information of the wireless communication network to the terminal. The user selects a wireless network to be used. The corresponding processing process may be divided into the following steps:
Step 1, the server acquires the attribute information of the wireless communication network corresponding to at least one network identifier and sends the attribute information to the mobile terminal.

In implementation, the server also may store the attribute information of each wireless communication network. The attribute information may comprise the names of the wireless communication network, fee information of the wireless communication network, etc. After acquiring the network identifier of the SIM card information request, the server may acquire the attribute information of the wireless communication network corresponding to these network identifiers respectively and then send the attribute information to the mobile terminal.

Step 2, the mobile terminal receives attribute information of the wireless communication network corresponding to at least one network identifier sent by the server.

Step 3, the mobile terminal displays the attribute information of the wireless communication network corresponding to at least one network identifier.

In implementation, after receiving the attribute information of the wireless communication network corresponding to at least one network identifier sent by the server, the mobile terminal may acquire the name and the fee information of the wireless communication network corresponding to at least one above network identifier, and display the name and the fee information of the wireless communication network correspondingly.

Step 4, when receiving a selection instruction of the wireless communication network corresponding to the first network identifier in at least one network identifier, the mobile terminal sends network selection notification to the server. The network selection notification carries the first network identifier.

In implementation, after the mobile terminal displays the name and the corresponding fee information of at least one wireless communication network, the user may, according to his/her needs, select the wireless communication network (i.e., the wireless communication network corresponding to the first network identifier) which is desired to be used. For example, the user may click an item corresponding to some wireless communication network to select the wireless communication network. After the user selects the wireless communication network, the mobile terminal may receive the selection instruction of the wireless communication network corresponding to the first network identifier, further acquire the first network identifier, add the first network identifier to the network selection notification and then send the network selection notification to the server.

Step 5, the server receives the network selection notification sent by the mobile terminal. The network selection notification carries the first network identifier in at least one network identifier.

Step 6, the serve acquires the first network identifier carried in the network selection notification and, according to the corresponding relation between the identity information and encryption data of SIM cards and the network identities of the belonging wireless communication network which is stored in advance, determines the identity information and encryption data of the first SIM card corresponding to the first network identifier.

In implementation, after receiving the network selection notification sent by the mobile terminal, the server may parse the network selection notification, acquire the first network identifier carried therein, determine the identity information and encryption data of the SIM card corresponding to the first network identifier in the corresponding relation of the identity information and encryption data of the SIM card stored locally and the network identifier of the belonging wireless communication network, and randomly select the identity information and encryption data of the SIM card to be used (i.e., the identity information and encryption data of the first SIM card) in the identity information and encryption data of these SIM card, and then carry out step 305.

In step 305, the server sends the identity information and encryption data of the first SIM card to the mobile terminal.

In implementation, after determining the identity information and encryption data of the first SIM card, the server may send the identity information and encryption data of the first SIM card to the mobile terminal to make the mobile terminal carry out subsequent processing. In addition, the server may also send the password information (for example, PIN (Personal Identification Number)) of the first SIM card to the mobile terminal.

In step 306, the mobile terminal receives the identity information and encryption data of the first SIM card sent by the server. The first SIM card corresponds to the wireless communication network corresponding to the first network identifier in at least one network identifier.

In implementation, the server may send the identity information and encryption data of the first SIM card to the mobile terminal. The mobile terminal may receive the identity information and encryption data of the first SIM card sent by the server, and store the received identity information and encryption data of the first SIM card. The mobile terminal may store the identity information and encryption data of the first SIM card in a secure chip which includes but is not limited to SE (secure element), TEE (Trusted Execution Environment) and EUICC (Embedded Universal Integrated Circuit Card), and the like.

In step 307, the mobile terminal transmits the information by adding the identity information and encryption data of the first SIM to the wireless communication network corresponding to the first network identifier.

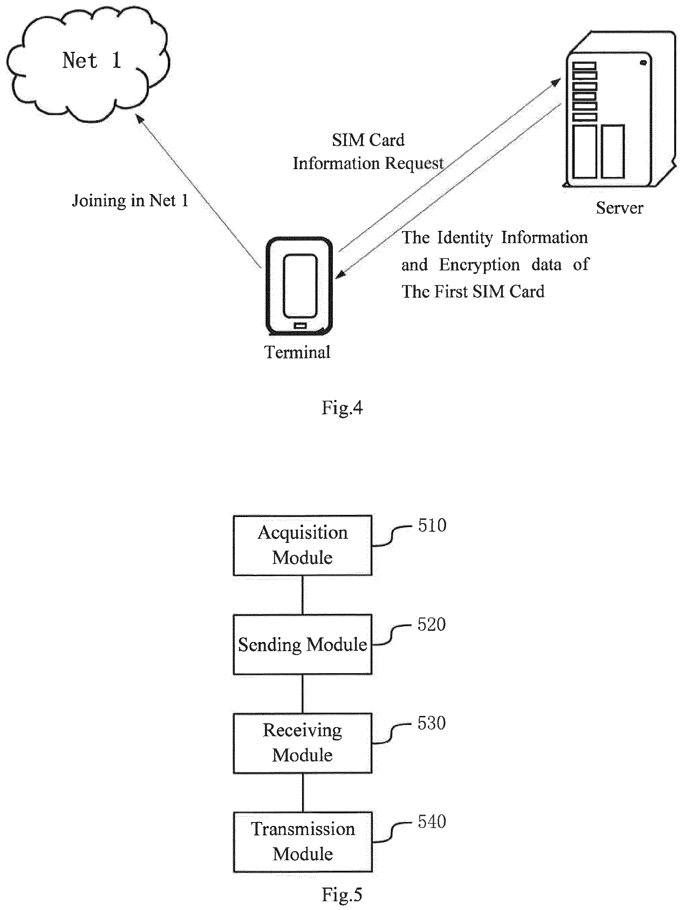

In implementation, each SIM card is provided with a corresponding string or code in advance. After receiving the identity information of the SIM card, the mobile terminal may acquire the string corresponding to the SIM card, then encrypt the string through the encryption data and encrypted algorithm preset in the above application program, and further send the identity information of the SIM card and the encrypted string to the network server of the wireless communication network (i.e., the wireless communication network corresponding to the first network identifier, labelled as net 1) belonged to the SIM card. After receiving this information, the network server may, according to the identifier information of the SIM card, determine the string corresponding to the SIM card in a local database, then encrypt the string with the local encryption data and the preset encrypted algorithm, and further compare the local encrypted string with the received encrypted string to determine whether they are the same. If they are the same, the network server allows the mobile terminal to join in net 1 through the SIM card. If they are different, the network server refuses the mobile terminal to join in net 1 through the SIM card. As shown in Fig.4, it is a block diagram of a system of an embodiment of the invention, including the terminal, the server and net 1.

It needs to be described that the person skilled in the art may arrange a corresponding processing component in the mobile terminal in advance to carry out the above processing. After joining in the wireless communication network corresponding to the first network identity, the mobile terminal may transmit the information through the wireless communication network, for example, browsing the network information, downloading the data or carrying out mobile communication. Therefore, the traffic charge and communication charge generated in the process of information transmission by the user may be charged according to the charging standard at the user's locality.

In an embodiment of the disclosure, acquiring the network identity of the currently detected wireless communication network of at least one operator, sending the SIM card information request to the server, the SIM card information request carrying at least one acquired network identity, receiving the identity information and encryption data of the first SIM card sent by the server, the first SIM card corresponding to the wireless communication network corresponding to the first network identity in at least one network identity, joining the wireless communication network corresponding to the first network identity through the identity information and encryption data of the first SIM card, and transmitting information. In this way, the mobile terminal may process the information to be transmitted through the wireless communication network of a current locality instead of processing the information to be transmitted by sending it to the wireless communication network belonged to the SIM card of the mobile terminal through the wireless communication network at the user's locality. Therefore, the efficiency of information transmission by the user is improved.

### Embodiment 3

Based on the same technical conception, the embodiment of the disclosure also provides a terminal. As shown in Fig. 5, the terminal includes an acquisition module 510, a sending module 520, a receiving module 530 and a transmission module 540.

The acquisition module 510 is configured to acquire a network identity of a currently detected wireless communication network of at least one operator;

The sending module 520 is configured to send a SIM card information request to a server. The SIM card information request carries at least one acquired network identity;

The receiving module 530 is configured to receive identity information and encryption data of a first SIM card sent by the server. The first SIM card corresponds to the wireless communication network corresponding to a first network identity in at least one network identity;

The transmission module 540 is configured to join the wireless communication network corresponding to the first network identity through the identity information and encryption data of the first SIM card, and transmit information.

Optionally, the sending module 520 is configured to:
If the network identity of a currently used SIM card is different from at least one acquired network identity, a locality is determined to be under a roaming state.

If the locality is under the roaming state, the SIM information request is sent to the server. The SIM card information request carries at least one acquired network identity.

Optionally, the sending module 520 is configured to:
If the network identity of the currently used SIM card is different from at least one acquired network identity, and the identity information and encryption data of the SIM card corresponding to the wireless communication network corresponding to at least one network identity are not stored locally, the locality is determined to be under the roaming state.

Optionally, the acquisition module 510 is configured to:
When detecting that the position of itself is changed and a changed distance exceeds a preset threshold, the acquisition module acquires the network identity of the currently detected wireless communication network of at least one operator.

Optionally, the acquisition module 510 is configured to:
When a preset cycle for detecting is reached, the acquisition module acquires the network identity of the currently detected wireless communication network of at least one operator.

Optionally, the receiving module 530 is also configured to:
receive attribute information of the wireless communication network corresponding to at least one network identity sent by the server;
display the attribute information of the wireless communication network corresponding to at least one network identity.

The sending module 520 is also configured to:
When receiving a selection instruction of the wireless communication network corresponding to the first network identity in at least one network identity, the sending module 520 sends network selection notification to the server. The network selection notification carries the first network identity.

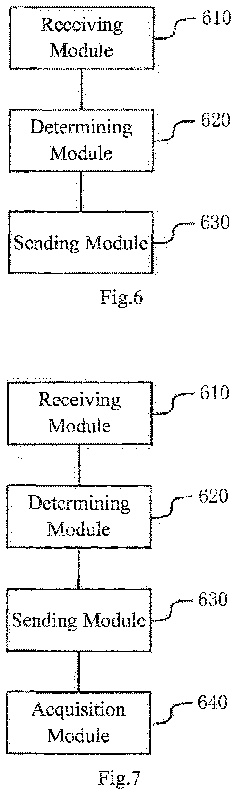

Based on the same technical conception, the embodiment of the invention also provides a server. As shown in Fig. 6, the server includes a receiving module 610, a determining module 620 and a sending module 630.

The receiving module 610 is configured to receive a SIM card information request sent by a mobile terminal. The SIM card information request carries at least one network identity acquired by the mobile terminal.

The determining module 620 is configured to select a first network identity from at least one network identity. According to the corresponding relation between the identity information and encryption data of SIM cards and the network identities of the belonging wireless communication network which is stored in advance, the determining module determines the identity information and encryption data of the first SIM card corresponding to the first network identity.

The sending module 630 is configured to send the identity information and encryption data of the first SIM card to the mobile terminal.

Optionally, as shown in Fig. 7, the server also includes an acquisition module 640, which is configured to:
acquire attribute information of the wireless communication network corresponding to at least one network identity, and send the attribute information to the mobile terminal.

The receiving module 610 is also configured to:
Receive the network selection notification sent by the mobile terminal. The network selection notification carries the first network identity in at least one network identity.

The determining module 620 is configured to:
acquire the first network identity carried in the network selection notification, and determine the identity information and encryption data of the first SIM card corresponding to the first network identity according to the corresponding relation between the identity information and encryption data of SIM cards and the network identities of the belonging wireless communication network which is stored in advance.

With respect to the terminal and the server in the above embodiments, the detailed way of the operation of each module has been described in the embodiments of related methods, and hence will not be described in details any more.

In an embodiment of the disclosure, acquiring the network identity of the currently detected wireless communication network of at least one operator, sending the SIM card information request to the server, the SIM card information request carrying at least one acquired network identity, receiving the identity information and encryption data of the first SIM card sent by the server, the first SIM card corresponding to the wireless communication network corresponding to the first network identity in at least one network identifier, joining the wireless communication network corresponding to the first network identity through the identity information and encryption data of the first SIM card, and transmitting information. In this way, the mobile terminal may process the information to be transmitted through the wireless communication network of a current locality instead of processing the information to be transmitted by sending it to the wireless communication network belonged to the SIM card of the mobile terminal through the wireless communication network at the user's locality. Therefore, the efficiency of information transmission by the user is improved.

### Embodiment 4

Based on the same technical conception, the embodiment of the invention also provides a system for transmitting information. The system includes a terminal and a server, wherein:
The terminal is configured to acquire a network identity of a currently detected wireless communication network of at least one operator and send a SIM card information request to the server. The SIM card information request carries at least one acquired network identity. The terminal receives identity information and encryption data of a first SIM card sent by the server. The first SIM card corresponds to the wireless communication network corresponding to a first network identity in at least one network identity. The terminal transmits the information by joining in the wireless communication network corresponding to the first network identity with the identity information and encryption data of the first SIM identity information.

The server is configured to receive the SIM card information request sent by a mobile terminal, select the first network identity from at least one network identity, and determine the identity information and encryption data of the first SIM card corresponding to the first network identity according to the corresponding relation between the identity information and encryption data of SIM cards and the network identities of the belonging wireless communication network which is stored in advance, and send the identity information and encryption data of the first SIM card to the mobile terminal.

In an embodiment of the disclosure, acquiring the network identity of the currently detected wireless communication network of at least one operator, sending the SIM card information request to the server, the SIM card information request carrying at least one acquired network identity, receiving the identity information and encryption data of the first SIM card sent by the server, the first SIM card corresponding to the wireless communication network corresponding to the first network identity in at least one network identity, joining the wireless communication network corresponding to the first network identity through the identity information and encryption data of the first SIM card, and transmitting information. In this way, the mobile terminal may process the information to be transmitted through the wireless communication network of a current locality, instead of processing the information to be transmitted by sending it to the wireless communication network belonged to the SIM card of the mobile terminal through the wireless communication network at the user's locality. Therefore, the efficiency of information transmission by the user is improved.

### Embodiment 5

An embodiment of the disclosure also shows a structural diagram of a terminal. The terminal may be a mobile phone, etc.

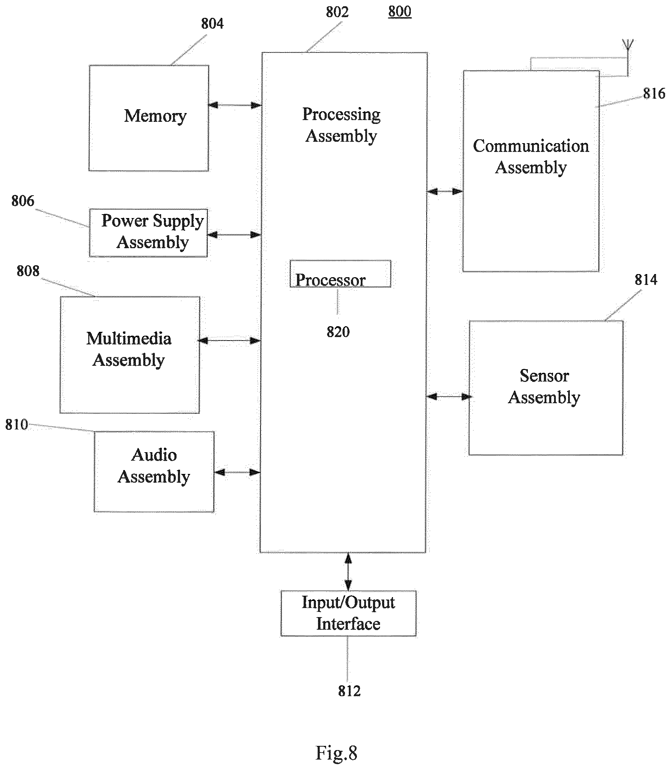

Referring to Fig. 8, the terminal 800 may include one or more following assemblies: a processing assembly 802, a memory 804, a power supply assembly 806, a multimedia assembly 808, an audio assembly 810, an input/output (I/O) interface 812, a sensor assembly 814 and a communication assembly 816.

The processing assembly 802 generally controls the whole operations of the terminal 800, for example, display, phone call, data communication, camera operation and record operation. The processing assembly 802 may include one or more processors 820 to implement an instruction to complete all or part of steps of the above methods. In addition, the processing assembly 802 may include one or more modules to facilitate the interaction between the processing assembly 802 and other assemblies. For example, the processing assembly 802 may include a multimedia module to facilitate the interaction between the processing assembly 808 and the processing assembly 802.

The memory 804 is configured to store various types of data to support the operation performed on the terminal 800. The examples of such data include an instruction of any application program or method, contact data, address book data, massages, pictures, videos, etc. which are operated on the terminal 800. The memory 804 may be realized with any kind of a volatile and non-volatile storage device or combination thereof, for example, Static Random Access Memory (SRAM), Electrically-Erasable Programmable Read Only Memory (EEPROM), Erasable Programmable Read Only Memory (EPROM), Programmable Read Only Memory (PROM), Read Only Memory (ROM), a magnetic memory, a flash memory, a magnetic disk or an optical disk.

The power supply assembly 806 provides power for various assemblies of the terminal 800. The power supply assembly 806 may include a power supply management system, one or more power supplies, and other assemblies for generating, managing and distributing power to an audio output apparatus 800.

The multimedia assembly 808 includes a screen providing an output interface between the terminal 800 and the user. In some embodiments, the screen may include a Liquid Crystal Display (LCD) and a Touch Panel (TP). If the screen includes the touch panel, the screen may be realized as a touch screen to receive an input signal from the user. The touch panel includes one or more touch sensors to sense the touching, sliding and the gestures on the touch panel. The touch sensor may not only sense the touching or border of sliding gesture but only detect the duration time and pressure related to touching or sliding operation. In some embodiments, the multimedia assembly 808 includes one front-facing camera and/or one rear-facing camera. When the terminal 800 is under an operation mode, for example, a shooting mode or a video mode, the front-facing camera and/or the rear-facing camera may receive outside multimedia data. Each one of front-facing camera and rear-facing camera may be one fixed optical lens system or have focal length or optical zoom ability.

The audio assembly 810 is configured to output and/or input audio signal. For example, the audio assembly 810 includes one microphone (MIC). When the audio output apparatus 800 is under the operation mode, for example, a calling mode, a record mode and a speech recognition mode, the microphone is configured to receive outside audio data. The received audio signal may be further stored in the memory 804 or sent via the communication assembly 816.

An I/O interface 812 provides an interface between the processing assembly 802 and a peripheral interface module. The above peripheral interface module may be a keyboard, a click wheel, and button, etc. The button may include but not limit to home page button, volume button, start button and lock button.

The sensor assembly 814 includes one or more sensors and is configured to provide various aspects of the assessment state for the terminal 800. For example, the sensor assembly 814 may detect the on/off state of the terminal 800, the relative positioning of the assemblies (for example, the assemblies are display and a keypad of the terminal 800), position change of the terminal 800 or one assembly of the terminal 800, presence or absence of the touch between the user and the terminal 800, as well as the orientation or acceleration/deceleration and temperature change of the terminal 800. The sensor assembly 814 may include a proximity sensor configured to detect the presence of an adjacent object when there is not any physical contact. The sensor assembly 814 may also include an optical sensor (such as CMOS or a CCD image sensor) configured to be used in imaging application. In some embodiments, the sensor assembly 814 may also include an acceleration sensor, a gyro sensor, a magnetic sensor, a pressure sensor or a temperature sensor.

The communication assembly816 is configured to facilitate the wired or wireless communication between the terminal 800 and other apparatuses.

The terminal 800 may access the wireless network based on a communication standard, such as WiFi, 2G or 3G, or the combination thereof. In one exemplary embodiment, the communication assembly816 receives a broadcast signal or broadcast associated information from an external broadcast management system via a broadcast channel. In one exemplary embodiment, the communication assembly816 also includes a Near Field Communication (NFC) module to facilitate short-range communication. For example, the NFC module may be based on Radio Frequency Identification (RFID) technology, Infrared Data Association (IrDA) technology, Ultra-Wideband (UWB) technology, Bluetooth (BT) technology and other technologies.

In an exemplary embodiment, the terminal 800 may be realized through one or more Application Specific Integrated Circuits (ASIC), a Digital Signal Processor (DSP), a Digital Signal Processing Device (DSPD), a Programmable Logic Device (PLD), a Field Programmable Gate Array (FPGA), a controller, a microcontroller, a microprocessor, or other electronic elements, and configured to carry out the method described above.

In an exemplary embodiment, a non-transitory computer-readable storage medium comprising the instruction is also provided, for example, the memory 804 including the instruction. The above instruction may be carried out by the processor 820 of the terminal 800 to complete the above method. For example, the non-transitory computer-readable storage medium may be a ROM, a random access memory (RAM), a CD-ROM, a magnetic tape, a floppy disk, an optical data storage devices and the like.

For a non-transitory computer-readable storage medium, when the instruction in the storage medium is carried out by the processor of the terminal, the terminal may carry out a method for transmitting information. The method comprises:
acquiring a network identifier of a currently detected wireless communication network of at least one operator;
sending a SIM card information request to a server, the SIM card information request carrying at least one acquired network identifier;
receiving identity information and encryption data of a first SIM card sent by the server, the first SIM card corresponding to the wireless communication network corresponding to a first network identifier in at least one network identifier; and
joining the wireless communication network corresponding to the first network identity through the identity information and encryption data of the first SIM card, and transmitting information.

Optionally, sending the SIM card information request to the server, the SIM card information request carrying at least one acquired network identifier, further comprising:
If the network identifier of a currently used SIM card is different from at least one acquired network identifier, a locality is determined to be under a roaming state;
If the locality is under the roaming state, the SIM card information request is sent to the server. The SIM card information request carries at least one acquired network identifier.

Optionally, if the network identifier of the currently used SIM card is different from at least one obtained network identifier, the locality is determined to be under the roaming state, further comprises:
If the network identifier of the currently used SIM card is different from at least one acquired network identifier, and the identity information and encryption data of the SIM card corresponding to the wireless communication network corresponding to at least one network identifier are not stored locally, the locality is determined to be under the roaming state.

Optionally, acquiring the network identifier of the currently detected wireless communication network of at least one operator further comprising:
When detecting that the position of itself is changed and a changed distance exceeds a preset threshold, acquiring the network identifier of the currently detected wireless communication network of at least one operator.

Optionally, acquiring the network identifier of the currently detected wireless communication network of at least one operator further comprising:
When a preset cycle for detecting is reached, acquiring the network identifier of the currently detected wireless communication network of at least one operator.

Optionally, the method further comprises:
receiving attribute information of the wireless communication network corresponding to at least one network identifier sent by the server;
displaying the attribute information of the wireless communication network corresponding to at least one network identifier; and
when receiving a selection instruction of the wireless communication network corresponding to the first network identifier in at least one network identifier, sending network selection notification to the server, the network selection notification carrying the first network identifier.

In an embodiment of the disclosure, acquiring the network identifier of the currently detected wireless communication network of at least one operator, sending the SIM card information request to the server, the SIM card information request carrying at least one acquired network identifier, receiving the identity information and encryption data of the first SIM card sent by the server, the first SIM card corresponding to the wireless communication network corresponding to the first network identifier in at least one network identifier, joining the wireless communication network corresponding to the first network identity through the identity information and encryption data of the first SIM card, and transmitting information. In this way, the mobile terminal may process the information to be transmitted through the wireless communication network of a current locality, instead of processing the information to be transmitted by sending it to the wireless communication network belonged to the SIM card of the mobile terminal through the wireless communication network at the user's locality. Therefore, the efficiency of information transmission by the user is improved.

### Embodiment 6

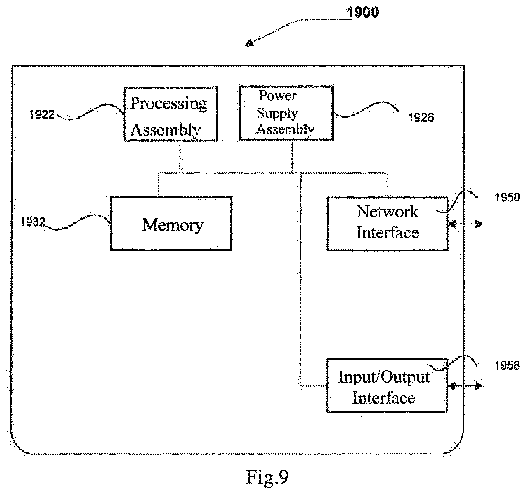

Fig. 9 is a block diagram showing a device 1900 for displaying a use record in accordance with an exemplary embodiment. For example, the device 1900 may be provided as a server. Referring to FIG. 9, the device 1900 includes a processing assembly 1922 which further includes one or more processors, and memory resource represented by the memory 1932 for storing the instruction carried out by the processing assembly 1922, e.g., an application program. The application program stored in the memory 1932 may include one or more modules each of which corresponds to a set of instructions. Moreover, the processing assembly 1922 is configured to carry out the instruction to perform the above method for displaying the use record.

The device 1900 may also include a power supply assembly 1926 configured to perform the management of the device 1900, one wired or wireless network interface 1950 configured to connect the device 1900 to the network, and one input/output (I/O) interface 1958.The device 1900 can be operated based on the operating system stored in the memory 1932, for example Windows ServerTM, Mac OS XTM, UnixTM, LinuxTM, FreeBSDTM or the like.

The device 1900 can include the memory, and one or more programs stored in the memory. One or more programs configured to be carried out by one or more above processors contains the following operating instructions:
Receiving a SIM card information request sent by a mobile terminal, the SIM card information request carrying at least one network identifier acquired by the mobile terminal;
selecting a first network identifier from at least one network identifier, and determining the identity information and encryption data of the first SIM card corresponding to the first network identifier according to the corresponding relation between the identity information and encryption data of SIM cards and the network identities of the belonging wireless communication network which is stored in advance; and
sending the identity information and encryption data of the first SIM card to the mobile terminal.

Optionally, the method also comprises:
acquiring attribute information of the wireless communication network corresponding to at least one network identifier, sending the attribute information to the mobile terminal;
receiving network selection notification sent by the mobile terminal, the network selection notification carrying the first network identifier in at least one network identifier;
selecting the first network identifier from at least one network identifier, and determining the identity information and encryption data of the first SIM card corresponding to the first network identifier according to the corresponding relation between the identity information and encryption data of SIM cards and the network identities of the belonging wireless communication network which is stored in advance, further comprising:
   acquiring the first network identifier carried in the network selection notification, and determining the identity information and encryption data of the first SIM card corresponding to the first network identifier according to the corresponding relation between the identity information and encryption data of SIM cards and the network identities of the belonging wireless communication network which is stored in advance.

In an embodiment of the disclosure, acquiring the network identifier of the currently detected wireless communication network of at least one operator, sending the SIM card information request to the server, the SIM card information request carrying at least one acquired network identifier, receiving the identity information and encryption data of the first SIM card sent by the server, the first SIM card corresponding to the wireless communication network corresponding to the first network identifier in at least one network identifier, joining the wireless communication network corresponding to the first network identity through the identity information and encryption data of the first SIM card, and transmitting information. In this way, the mobile terminal may process the information to be transmitted through the wireless communication network of a current locality, instead of processing the information to be transmitted by sending it to the wireless communication network belonged to the SIM card of the mobile terminal through the wireless communication network at the user's locality. Therefore, the efficiency of information transmission by the user is improved.

Where functional modules are referred to in apparatus embodiments for carrying out various steps of the described method(s) it will be understood that these modules may be implemented in hardware, in software, or a combination of the two. When implemented in hardware, the modules may be implemented as one or more hardware modules, such as one or more application specific integrated circuits. When implemented in software, the modules may be implemented as one or more computer programs that are executed on one or more processors.

It will be appreciated that the present disclosure is not limited to the exact construction that has been described above and illustrated in the accompanying drawings, and that various modifications and changes can be made. It is intended that the scope of the invention only be limited by the appended claims.

## Claims

1. A method for transmitting information, the method being implemented in a system including a mobile terminal and a server and the method comprising, at the mobile terminal:
acquiring (101) a network identity of a currently detected wireless communication network of at least one operator, when detecting that the position of the terminal has changed and the changed distance exceeds a preset threshold;
determining if the network identity of a currently used Subscriber Identity Module, SIM, card is different from all of the acquired network identities and the identity information and encryption data of the SIM card corresponding to the currently detected wireless communication network are not stored locally, and if so, determining a locality to be under a roaming state;
sending (102) a SIM card information request to the server if the locality is under the roaming state, wherein the SIM card information request carries at least one acquired network identity;
receiving (103) identity information and encryption data of a first SIM card sent by the server, the first SIM card corresponding to a first wireless communication network that corresponds to a first network identity of the at least one acquired network identity; and
joining (104) the first wireless communication network corresponding to the first network identity using the identity information and encryption data of the first SIM card, and transmitting information over the first wireless communication network.

2. The method according to claim 1, wherein the method further comprises, at the mobile terminal, receiving attribute information of the currently detected wireless communication network corresponding to the at least one acquired network identity, said attribute information being sent by the server; displaying said attribute information; and when receiving, from a user of the terminal, a selection instruction on the first wireless communication network corresponding to the first network identity, sending a network selection notification to the server, the network selection notification carrying the first network identity.

3. The method according to claim 1, the method further comprising, at the server:
receiving (201) the SIM card information request sent by the mobile terminal under a roaming state;
selecting (202) a first network identity from the at least one network identity acquired by the mobile terminal and determining the identity information and encryption data of the first SIM card corresponding to the first network identity according to a corresponding relation between identity information and encryption data of SIM cards and the network identities of the wireless communication network to which the SIM cards belong, which relation is stored in advance; and
sending (203) the identity information and encryption data of the first SIM card to the mobile terminal.

4. The method according to claim 3, the method further comprising, at the server:
acquiring attribute information of the currently detected wireless communication network corresponding to the at least one acquired network identity, and sending the attribute information to the mobile terminal;
receiving a network selection notification sent by the mobile terminal, wherein the network selection notification carries the first network identity of the at least one acquired network identity;
wherein the step of selecting the first network identity from the at least one acquired identity further comprises:
acquiring the first network identity carried in the network selection notification, and determining the identity information and encryption data of the first SIM card corresponding to the first network identity according to the corresponding relation between identity information and encryption data of SIM cards and the network identities of the wireless communication network to which the SIM cards belong, which relation is stored in advance.

5. A mobile terminal, comprising:
an acquisition module (510) for acquiring a network identity of a currently detected wireless communication network of at least one operator when detecting that the position of the terminal has changed and the changed distance exceeds a preset threshold;
a sending module (520) configured to, if the network identity of a currently used Subscriber Identity Module, SIM, card is different from all the acquired network identities and the identity information and encryption data of the SIM card corresponding to the currently detected wireless communication network are not stored locally, determine a locality to be under a roaming state; the sending module (520) being further configured to, if the locality is determined to be under the roaming state, send a SIM card information request to a server; wherein the SIM card information request carries at least one acquired network identity;
a receiving module (530) for receiving identity information and encryption data of a first SIM card sent by the server, wherein the first SIM card corresponds to a first wireless communication network corresponding to a first network identity of the at least one acquired network identity; and
a transmission module (540) for joining the first wireless communication network corresponding to the first network identity using the identity information and encryption data of the first SIM card, and transmitting information over the first wireless communication network.

6. The mobile terminal according to claim 5, wherein the receiving module is also configured to:
receive attribute information of the currently detected wireless communication network corresponding to the at least one acquired network identity, said attribute information being sent by the server; and
display the attribute information; and wherein
the sending module is also configured to:
when receiving, from a user of the mobile terminal, a selection instruction of the first wireless communication network corresponding to the first network identity of the at least one acquired network identity, send network selection notification to the server, wherein the network selection notification carries the first network identity.

7. A system comprising a mobile terminal according to claim 5 and a server, the server comprising:
a receiving module (610) for receiving the Subscriber Identity Module, SIM, card information request sent by the mobile terminal under a roaming state;
a determining module (620) for selecting the first network identity from the at least one acquired network identity, and determining the identity information and encryption data of a first SIM card corresponding to the first network identity according to a corresponding relation between identity information and encryption data of SIM cards and the network identities of the wireless communication network to which the SIM cards belong, which relation is stored in advance; and
a sending module (630) for sending the identity information and encryption data of the first SIM card to the mobile terminal.

8. The system according to claim 7, the server further comprising an acquisition module which is configured to:
acquire attribute information of the currently detected wireless communication network corresponding to the at least one acquired network identity, and send the attribute information to the mobile terminal;
and wherein the receiving module is further configured to:
receive a network selection notification sent by the mobile terminal, wherein the network selection notification carries the first network identity;
and wherein the determining module is further configured to: acquire the first network identity carried in the network selection notification, and determine the identity information and encryption data of the first SIM card corresponding to the first network identity according to the corresponding relation of the identity information and encryption data of the SIM card stored in advance and the network identity of the wireless communication network to which the SIM cards belong.

## Patentansprüche

1. Verfahren zum Übertragen von Informationen, wobei das Verfahren in einem System implementiert wird, das ein mobiles Endgerät und einen Server aufweist, und wobei das Verfahren am mobilen Endgerät Folgendes umfasst:
Erfassen (101) einer Netzwerkidentität eines aktuell erkannten drahtlosen Kommunikationsnetzwerks von wenigstens einem Betreiber, wenn erkannt wird, dass die Position des Endgeräts sich geändert hat und die geänderte Entfernung einen voreingestellten Schwellenwert übersteigt;
Bestimmen, ob die Netzwerkidentität einer aktuell verwendeten Subscriber Identity Module- (SIM) -Karte sich von all den erfassten Netzwerkidentitäten unterscheidet und die Identitätsinformationen und Verschlüsselungsdaten der SIM-Karte, die dem aktuell erkannten drahtlosen Kommunikationsnetzwerk entspricht, nicht lokal gespeichert sind, und wenn ja, Bestimmen, dass eine Lokalität unter einem Roaming-Zustand ist;
Senden (102) einer SIM-Karteninformationsanforderung an den Server, wenn die Lokalität unter dem Roaming-Zustand ist, wobei die SIM-Karteninformationsanforderung wenigstens eine erfasste Netzwerkidentität trägt;
Empfangen (103) von Identitätsinformationen und Verschlüsselungsdaten einer ersten SIM-Karte, die vom Server gesendet wurden, wobei die erste SIM-Karte einem ersten drahtlosen Kommunikationsnetzwerk entspricht, das einer ersten Netzwerkidentität der wenigstens einen erfassten Netzwerkidentität entspricht; und
dem ersten drahtlosen Kommunikationsnetzwerk, das der ersten Netzwerkidentität entspricht, Beitreten (104) unter Verwendung der Identitätsinformationen und Verschlüsselungsdaten der ersten SIM-Karte und Übertragen von Informationen über das erste drahtlose Kommunikationsnetzwerk.

2. Verfahren nach Anspruch 1, wobei das Verfahren ferner Folgendes am mobilen Endgerät umfasst:
Empfangen von Attributinformationen des aktuell erkannten drahtlosen Kommunikationsnetzwerks, das der wenigstens einen erfassten Netzwerkidentität entspricht, wobei die genannten Attributinformationen vom Server gesendet werden;
Anzeigen der genannten Attributinformationen und
beim Empfangen einer Auswahlanweisung am ersten drahtlosen Kommunikationsnetzwerk, die der ersten Netzwerkidentität entspricht, von einem Benutzer des Endgeräts Senden einer Netzwerkauswahlbenachrichtigung an den Server, wobei die Netzwerkauswahlbenachrichtigung die erste Netzwerkidentität trägt.

3. Verfahren nach Anspruch 1, wobei das Verfahren ferner Folgendes am Server umfasst:
Empfangen (201) der SIM-Karteninformationsanforderung, die vom mobilen Endgerät unter einem Roaming-Zustand gesendet wird;
Auswählen (202) einer ersten Netzwerkidentität aus der wenigstens einen durch das mobile Endgerät erfassten Netzwerkidentität und Bestimmen der Identitätsinformationen und Verschlüsselungsdaten der ersten SIM-Karte, die der ersten Netzwerkidentität entspricht, gemäß einer entsprechenden Beziehung zwischen Identitätsinformationen und Verschlüsselungsdaten von SIM-Karten und den Netzwerkidentitäten des drahtlosen Kommunikationsnetzwerks, zu dem die SIM-Karten gehören, wobei diese Beziehung im Voraus gespeichert wird; und
Senden (203) der Identitätsinformationen und Verschlüsselungsdaten der ersten SIM-Karte an das mobile Endgerät.

4. Verfahren nach Anspruch 3, wobei das Verfahren ferner Folgendes am Server umfasst:
Erfassen von Attributinformationen des aktuell erkannten drahtlosen Kommunikationsnetzwerks, das der wenigstens einen erfassten Netzwerkidentität entspricht, und Senden der Attributinformationen an das mobile Endgerät;
Empfangen einer vom mobilen Endgerät gesendeten Netzwerkauswahlbenachrichtigung, wobei die Netzwerkauswahlbenachrichtigung die erste Netzwerkidentität der wenigstens einen erfassten Netzwerkidentität trägt;
wobei der Schritt des Auswählens der ersten Netzwerkidentität aus der wenigstens einen erfassten Netzwerkidentität ferner Folgendes umfasst:
Erfassen der in der Netzwerkauswahlbenachrichtigung getragenen ersten Netzwerkidentität und Bestimmen der Identitätsinformationen und Verschlüsselungsdaten der ersten SIM-Karte, die der ersten Netzwerkidentität entspricht, gemäß der entsprechenden Beziehung zwischen Identitätsinformationen und Verschlüsselungsdaten von SIM-Karten und den Netzwerkidentitäten des drahtlosen Kommunikationsnetzwerks, zu dem die SIM-Karten gehören, wobei diese Beziehung im Voraus gespeichert wird.

5. Mobiles Endgerät, das Folgendes umfasst:
ein Erfassungsmodul (510) zum Erfassen einer Netzwerkidentität eines aktuell erkannten drahtlosen Kommunikationsnetzwerks von wenigstens einem Betreiber, wenn erkannt wird, dass die Position des Endgeräts sich geändert hat und die geänderte Entfernung einen voreingestellten Schwellenwert übersteigt;
ein Sendemodul (520), konfiguriert zum Bestimmen, dass eine Lokalität unter einem Roaming-Zustand ist, wenn die Netzwerkidentität einer aktuell verwendeten Subscriber Identity Module- (SIM) -Karte sich von all den erfassten Netzwerkidentitäten unterscheidet und die Identitätsinformationen und Verschlüsselungsdaten der SIM-Karte, die dem aktuell erkannten drahtlosen Kommunikationsnetzwerk entspricht, nicht lokal gespeichert sind;
ein Empfangsmodul (530) zum Empfangen von Identitätsinformationen und Verschlüsselungsdaten einer ersten SIM-Karte, die vom Server gesendet wurden, wobei die erste SIM-Karte einem ersten drahtlosen Kommunikationsnetzwerk entspricht, das einer ersten Netzwerkidentität der wenigstens einen erfassten Netzwerkidentität entspricht; und
ein Übertragungsmodul (540) zum dem ersten drahtlosen Kommunikationsnetzwerk, das der ersten Netzwerkidentität entspricht, Beitreten (104) unter Verwendung der Identitätsinformationen und Verschlüsselungsdaten der ersten SIM-Karte und Übertragen von Informationen über das erste drahtlose Kommunikationsnetzwerk.

6. Mobiles Endgerät nach Anspruch 5, wobei das Empfangsmodul auch konfiguriert ist zum:
Empfangen von Attributinformationen des aktuell erkannten drahtlosen Kommunikationsnetzwerks, das der wenigstens einen erfassten Netzwerkidentität entspricht, wobei die genannten Attributinformationen vom Server gesendet werden; und
Anzeigen der genannten Attributinformationen; und wobei das Sendemodul auch konfiguriert ist zum:
beim Empfangen einer Auswahlanweisung des ersten drahtlosen Kommunikationsnetzwerks, das der ersten Netzwerkidentität der wenigstens einen erfassten Netzwerkidentität entspricht, von einem Benutzer des mobilen Endgeräts Senden einer Netzwerkauswahlbenachrichtigung an den Server, wobei die Netzwerkauswahlbenachrichtigung die erste Netzwerkidentität trägt.

7. System, umfassend ein mobiles Endgerät nach Anspruch 5 und einen Server, wobei der Server Folgendes umfasst:
ein Empfangsmodul (610) zum Empfangen der Subscriber Identity Module- (SIM) -Karteninformationsanforderung, die vom mobilen Endgerät unter einem Roaming-Zustand gesendet wird;
ein Bestimmungsmodul (620) zum Auswählen der ersten Netzwerkidentität aus der wenigstens einen erfassten Netzwerkidentität und Bestimmen der Identitätsinformationen und Verschlüsselungsdaten einer ersten SIM-Karte, die der ersten Netzwerkidentität entspricht, gemäß einer entsprechenden Beziehung zwischen Identitätsinformationen und Verschlüsselungsdaten von SIM-Karten und den Netzwerkidentitäten des drahtlosen Kommunikationsnetzwerks, zu dem die SIM-Karten gehören, wobei diese Beziehung im Voraus gespeichert wird; und
ein Sendemodul (630) zum Senden der Identitätsinformationen und Verschlüsselungsdaten der ersten SIM-Karte an das mobile Endgerät.

8. System nach Anspruch 7, wobei der Server ferner ein Erfassungsmodul umfasst, das konfiguriert ist zum:
Erfassen von Attributinformationen des aktuell erkannten drahtlosen Kommunikationsnetzwerks, das der wenigstens einen erfassten Netzwerkidentität entspricht, und Senden der Attributinformationen an das mobile Endgerät;
und wobei das Empfangsmodul ferner konfiguriert ist zum:
Empfangen einer vom mobilen Endgerät gesendeten Netzwerkauswahlbenachrichtigung, wobei die Netzwerkauswahlbenachrichtigung die erste Netzwerkidentität trägt;
und wobei das Bestimmungsmodul ferner konfiguriert ist zum:
Erfassen der in der Netzwerkauswahlbenachrichtigung getragenen ersten Netzwerkidentität und Bestimmen der Identitätsinformationen und Verschlüsselungsdaten der ersten SIM-Karte, die der ersten Netzwerkidentität entspricht, gemäß der entsprechenden im Voraus gespeicherten Beziehung der Identitätsinformationen und Verschlüsselungsdaten der SIM-Karte und der Netzwerkidentität des drahtlosen Kommunikationsnetzwerks, zu dem die SIM-Karten gehören.

## Revendications

1. Procédé de transmission d'informations, le procédé étant mis en oeuvre dans un système comportant un terminal mobile et un serveur et le procédé comprenant, au niveau du terminal mobile :
l'acquisition (101) d'une identité de réseau d'un réseau de communication sans fil présentement détecté d'au moins un opérateur, quand il est détecté que la position du terminal a changé et que la nouvelle distance dépasse un seuil prédéfini ;
la détermination que l'identité de réseau d'une carte de module d'identité d'abonné, SIM, présentement utilisée est différente ou non de toutes les identités de réseau acquises et que les informations d'identité et données de cryptage de la carte SIM correspondant au réseau de communication sans fil présentement détecté ne sont pas mémorisées localement, et dans ce cas, la détermination qu'une localité se trouve en état d'itinérance ;
l'envoi (102) d'une demande d'informations de carte SIM au serveur si la localité se trouve dans l'état d'itinérance, la demande d'informations de carte SIM comportant au moins une identité de réseau acquise ;
la réception (103) d'informations d'identité et de données de cryptage d'une première carte SIM envoyées par le serveur, la première carte SIM correspondant à un premier réseau de communication sans fil qui correspond à une première identité de réseau de l'au moins une identité de réseau acquise ; et
le rattachement (104) au premier réseau de communication sans fil correspondant à la première identité de réseau en utilisant les informations d'identité et données de cryptage de la première carte SIM, et la transmission d'informations sur le premier réseau de communication sans fil.

2. Procédé selon la revendication 1, le procédé comprenant en outre, au niveau du terminal mobile :
la réception d'informations d'attributs du réseau de communication sans fil présentement détecté correspondant à l'au moins une identité de réseau acquise, lesdites informations d'attribut étant envoyées par le serveur ;
l'affichage desdites informations d'attributs ;
à la réception, depuis un utilisateur du terminal, d'une instruction de sélection sur le premier réseau de communication sans fil correspondant à la première identité de réseau, l'envoi d'une notification de sélection de réseau au serveur, la notification de sélection de réseau comportant la première identité de réseau.

3. Procédé selon la revendication 1, le procédé comprenant en outre, au niveau du serveur :
la réception (201) de la demande d'informations de carte SIM envoyée par le terminal mobile en état d'itinérance ;
la sélection (202) d'une première identité de réseau parmi l'au moins une identité de réseau acquise par le terminal mobile, et la détermination des informations d'identité et données de cryptage de la première carte SIM correspondant à la première identité de réseau conformément à une relation correspondante entre des informations d'identité et données de cryptage de cartes SIM et les identités de réseau du réseau de communication sans fil auquel appartiennent les cartes SIM, laquelle relation étant mémorisée à l'avance ; et
l'envoi (203) des informations d'identité et données de cryptage de la première carte SIM au terminal mobile.

4. Procédé selon la revendication 3, le procédé comprenant en outre, au niveau du serveur :
l'acquisition d'informations d'attributs du réseau de communication sans fil présentement détecté correspondant à l'au moins une identité de réseau acquise, et l'envoi des informations d'attributs au terminal mobile ;
la réception d'une notification de sélection de réseau envoyée par le terminal mobile, la notification de sélection de réseau comportant la première identité de réseau de l'au moins une identité de réseau acquise ;
dans lequel l'étape de sélection de la première identité de réseau parmi l'au moins une identité de réseau acquise comprend en outre :
l'acquisition de la première identité de réseau incluse dans la notification de sélection de réseau, et la détermination des informations d'identité et données de cryptage de la première carte SIM correspondant à la première identité de réseau conformément à la relation correspondante entre des informations d'identité et de données de cryptage de cartes SIM et les identités de réseau du réseau de communication sans fil auquel appartiennent les cartes SIM, laquelle relation étant mémorisée à l'avance.

5. Terminal mobile, comprenant :
un module d'acquisition (510) pour acquérir une identité de réseau d'un réseau de communication sans fil présentement détecté d'au moins un opérateur, à la détection que la position du terminal a changé et que la nouvelle distance dépasse un seuil prédéfini ;
un module d'envoi (520) configuré pour, si l'identité de réseau d'une carte de module d'identité d'abonné, SIM, présentement utilisée est différente ou non de toutes les identités de réseau acquises et que les informations d'identité et données de cryptage de la carte SIM correspondant au réseau de communication sans fil présentement détecté ne sont pas mémorisées localement, déterminer qu'une localité est dans un état d'itinérance ; le module d'envoi (520) étant configuré en outre pour, s'il est déterminé que la localité est dans l'état d'itinérance, envoyer une demande d'informations de carte SIM à un serveur ; la demande d'informations de carte SIM comportant au moins une identité de réseau acquise;
un module de réception (530) pour recevoir des informations d'identité et données de cryptage d'une première carte SIM envoyées par le serveur, dans lequel la première carte SIM correspond à un premier réseau de communication sans fil correspondant à une première identité de réseau de l'au moins une identité de réseau acquise ; et
un module de transmission (540) pour le rattachement au premier réseau de communication sans fil correspondant à la première identité de réseau en utilisant les informations d'identité et données de cryptage de la première carte SIM, et transmettre des informations sur le premier réseau de communication sans fil,

6. Terminal mobile selon la revendication 5, dans lequel le module de réception est configuré également pour :
recevoir des informations d'attribut du réseau de communication sans fil présentement détecté correspondant à l'au moins une identité de réseau acquise, lesdites informations d'attribut étant envoyées par le serveur ; et
afficher les informations d'attributs ; et dans lequel
le module d'envoi est configuré également pour :
à la réception, depuis un utilisateur du terminal mobile, d'une instruction de sélection du premier réseau de communication sans fil correspondant à la première identité de réseau de l'au moins une identité de réseau acquise, envoyer une notification de sélection de réseau au serveur, la notification de sélection de réseau comportant la première identité de réseau.

7. Système comprenant un terminal mobile selon la revendication 5 et un serveur, le serveur comprenant :
un module de réception (610) pour recevoir la demande d'informations de carte de module d'identité d'abonné, SIM, envoyée par le terminal mobile en état d'itinérance ;
un module de détermination (620) pour sélectionner la première identité de réseau parmi l'au moins une identité de réseau acquise, et déterminer les informations d'identité et données de cryptage d'une première carte SIM correspondant à la première identité de réseau conformément à une relation correspondante entre des informations d'identité et de données de cryptage de cartes SIM et les identités de réseau du réseau de communication sans fil auquel appartiennent les cartes SIM, laquelle relation étant mémorisée à l'avance ; et
un module d'envoi (630) pour envoyer les informations d'identité et données de cryptage de la première carte SIM au terminal mobile.

8. Système selon la revendication 7, le serveur comprenant en outre un module d'acquisition configuré pour :
acquérir des informations d'attributs du réseau de communication sans fil présentement détecté correspondant à l'au moins une identité de réseau acquise, et envoyer les informations d'attributs au terminal mobile;
et dans lequel le module de réception est configuré en outre pour :
recevoir une notification de sélection de réseau envoyée par le terminal mobile, la notification de sélection de réseau comportant la première identité de réseau ;
et dans lequel le mode de détermination est configuré en outre pour :
acquérir la première identité de réseau incluse dans la notification de sélection de réseau, et déterminer les informations d'identité et données de cryptage de la première carte SIM correspondant à la première identité de réseau conformément à la relation correspondante des informations d'identité et données de cryptage de la carte SIM mémorisées à l'avance et l'identité de réseau du réseau de communication sans fil auxquelles appartiennent les cartes SIM.
